Europäisches Patentamt

**European Patent Office**

Office européen des brevets

(19)

(11) Veröffentlichungsnummer: **0 026 424**
**B1**

(12) ## EUROPÄISCHE PATENTSCHRIFT

(45) Veröffentlichungstag der Patentschrift:
**05.12.84**

(51) Int. Cl.³: **F 02 N 17/00**, F 02 D 17/04

(21) Anmeldenummer: **80105684.7**

(22) Anmeldetag: **22.09.80**

(54) **Einrichtung zum Abschalten eines Verbrennungsmotors.**

(30) Priorität: **28.09.79 DE 7927688 U**

(43) Veröffentlichungstag der Anmeldung:
**08.04.81 Patentblatt 81/14**

(45) Bekanntmachung des Hinweises auf die Patenterteilung:
**05.12.84 Patentblatt 84/49**

(84) Benannte Vertragsstaaten:
**AT BE CH DE FR GB IT LI LU NL SE**

(56) Entgegenhaltungen:
**DE - A - 2 803 145**
**DE - B - 2 158 095**
**DE - B - 2 517 906**
**DE - U - 7 927 688**
**FR - A - 2 303 952**
**US - A - 3 779 349**

(73) Patentinhaber: **Achterholt, Rainer, Paul-Zoll-Strasse 3,**
**D-8963 Waltenhofen 1 (DE)**

(72) Erfinder: **Achterholt, Rainer, Paul-Zoll-Strasse 3,**
**D-8963 Waltenhofen 1 (DE)**

(74) Vertreter: **Brehm, Hans-Peter, Dr. Dipl.-Chem. et al,**
**Patentanwälte Tischer, Kern & Brehm**
**Albert-Rosshaupter-Strasse 65, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Abschalten und erneuten Starten des Verbrennungsmotors eines Kraftfahrzeuges, mit einer auf die Neutralstellung des Schaltgetriebes ansprechenden Schaltvorrichtung, die in einem eine Verzögerungsschaltung enthaltenden Motorabschaltkreis liegt.

Aus der FR-A-2 303 952 und der US-A-3 779 349 sind derartige Abschalteinrichtungen bekannt. Nach der FR-A-2 303 952 befindet sich die Schaltvorrichtung am Getriebeschaltkasten. Sie soll offen sein, wenn sich das Schaltgetriebe in Neutralstellung befindet. In der US-A-3 779 349 ist über die Anordnung der Schaltvorrichtung nichts gesagt. Beide Druckschriften sagen auch nichts über die Ausbildung der Schaltvorrichtung aus.

Aus der DE-A-2 803 145 ist eine Einrichtung zum automatischen Motorabschalten vorgeschlagen, bei der ein Reed-Kontaktgeber der Erzeugung von Steuerimpulsen in Abhängigkeit von der Fahrgeschwindigkeit eines Fahrzeuges dient. Der Reed-Kontaktgeber ist an der Tachometerwelle angeordnet und schaltet je Halbumdrehung der Tachometerwelle ein und aus.

Da nicht jeder beliebige Schalter am Getriebeschaltkasten angebracht werden kann und auch die jeweilige Anordnung unklar bleibt, ist dieser Vorschlag nicht ohne weiteres realisierbar. Mindestens erfordert aber die nachträgliche Anbringung der Schalteinrichtung Demontage- und Anpassungsarbeiten am Fahrzeug.

Aufgabe der Erfindung ist es, eine Einrichtung der gattungsgemässen Art zu schaffen, die in ihrem Aufbau einfach ist, leicht montierbar ist, auch nachträglich an vorhandenen Fahrzeugen ohne grössere Demontagearbeiten eingebaut werden kann und eine Montage im Do-it-yourself-Verfahren erlaubt.

Diese Aufgabe wird erfindungsgemäss dadurch gelöst, dass die Schaltvorrichtung aus einem Reed-Schalter und einem Magneten besteht, von denen einer am Schalthebel des Schaltgetriebes und der andere ortsfest benachbart dem in seiner Neutralstellung befindlichen Schalthebel angeordnet ist.

Dank der Verwendung eines Reed-Schalters ist die Anordnung im Bereich des Schalthebels erst möglich, weil exakte Schaltstellungen nicht Voraussetzung ist. Der Schalthebel kann also in seiner Neutralstellung ein merkliches Spiel aufweisen. Der Einbau im Wageninneren ist sehr leicht lediglich nach Wegnahme der Abdeckmanschette möglich.

Dieselbe Schaltvorrichtung, die den Motor abschaltet, kann gemäss einer Ausgestaltung der Erfindung auch verwendet werden, um den Motor wieder zu starten. Sobald der Schalthebel aus der Neutralstellung herausbewegt wird, erhält der Anlasser Strom.

Die Zeichnung zeigt zwei Beispiele der Erfindung. Es zeigt:

Figur 1 eine schematische Draufsicht auf den Schalthebel mit Schaltkulisse,

Figur 2 eine schematische Seitenansicht des Schalthebels nach Figur 1,

Figur 3 eine perspektivische Ansicht eines Wählhebels mit Schaltkulisse für ein Automatikgetriebe und

Figur 4 ein elektrisches Schaltbild für die Abschalteinrichtung.

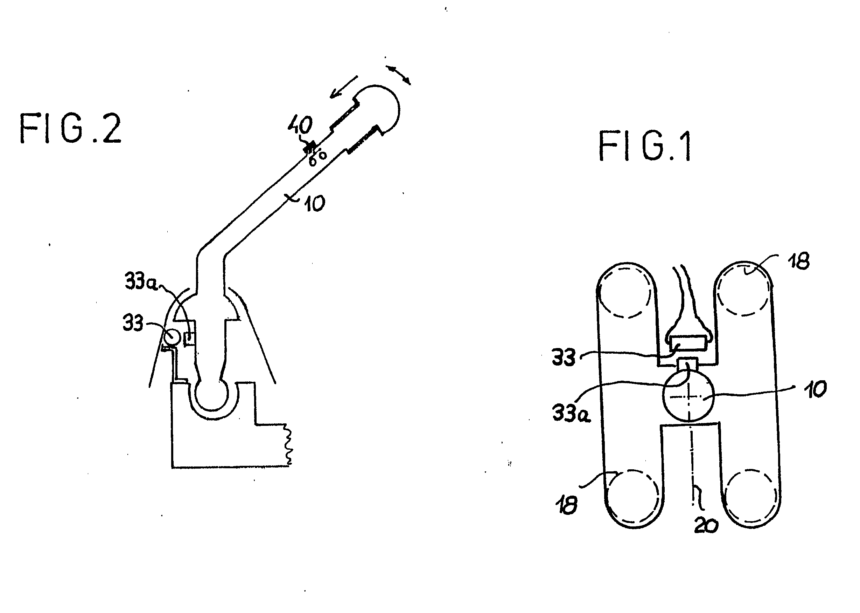

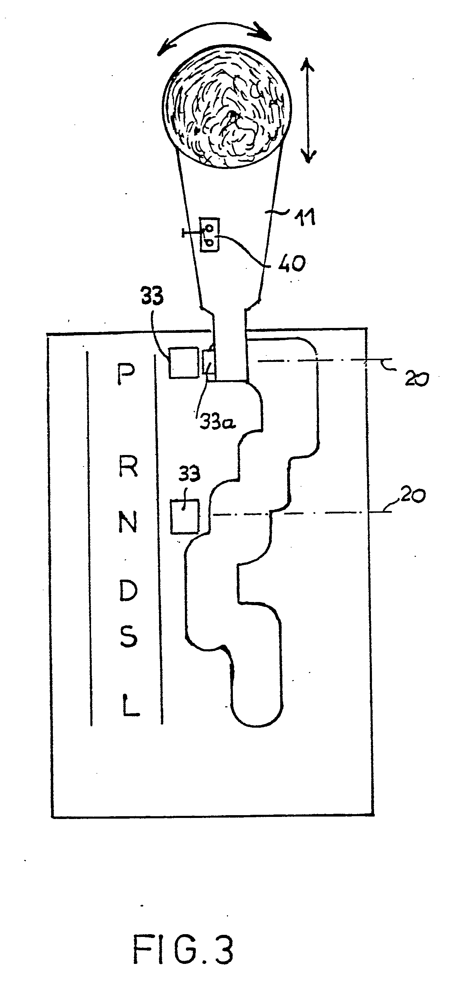

Figuren 1 und 2 zeigen einen Schalthebel 10, einer Vier-Gang-H-Schaltung. In der Leerlaufstellung 20 wird ein Reedschalter 33 von einem am Schalthebel 10 befestigten Magneten 33a geschlossen. In allen Stellungen 18 des Schalthebels ist der Reedschalter 33 offen. Bei dem Automatikgetriebe gemäss Figur 3 sind der Parkstellung P und der Neutralstellung N jeweils ein Reedschalter 33 zugeordnet, der von dem Magneten 33a am Wählhebel 11 betätigbar ist.

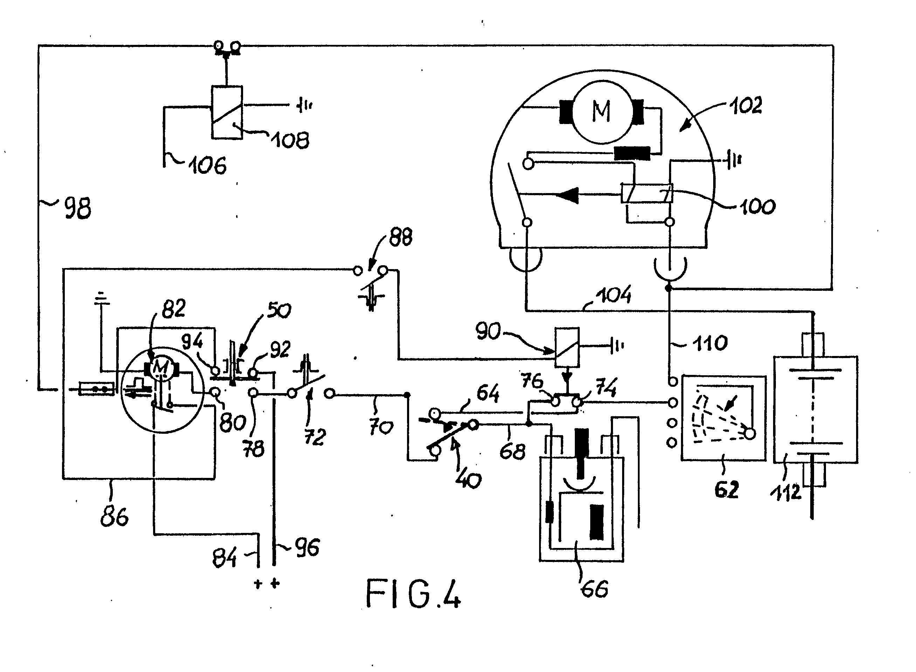

Die Schaltung ist in Figur 4 dargestellt. Eine elektrische Leitung 64 führt vom Zündschloss 62 zu einem am Schalthebel 10 bzw. Wählhebel 11 angebrachten Handwahlschalter 40, in dessen gestrichelter Stellung die Abschalteinrichtung ausser Betrieb ist und die Zündspule 66 über die Leitung 68 Strom erhält. Wird Schalter 40 betätigt, läuft Strom über eine Leitung 70 zu einem Motortemperaturschalter 72. Erst wenn dieser schliesst, wird die Schaltvorrichtung 50 aktiviert. Gelangt der Schalthebel 10 oder Wählhebel 11 in die Neutralstellung 20, schliesst der Reedschalter 33 und die Schaltvorrichtung 50 schliesst die Kontakte 78, 80, so dass ein Zeitverzögerungsrelais 82 nach einigen Sekunden anzieht und Strom von einer Stromquelle 84 über Leitung 86 und einem nur bei genügender Spannung der Fahrzeugbatterie 112 geschlossenen Schalter 88 einem Abschaltrelais 90 zuführt, so dass die Zündspule 66 stromlos wird. Der Motor schaltet ab.

Um den Motor wieder zu starten, wird der Schalthebel 10 aus der Neutralstellung 20 herausbewegt, wodurch die Schaltvorrichtung 50 umschaltet. Das Zeitverzögerungsrelais 82 fällt ab. Das Abschaltrelais 90 wird stromlos und die Zündspule 66 erhält Strom über die Kontakte 74, 76. Ein Stromstossrelais 100 des Anlassers 102 erhält Strom aus einer Stromquelle 96 über Leitung 98. Über Leitung 104 erhält der Anlasser Strom. Der Motor wird gestartet. Sobald die Lichtmaschine des Fahrzeuges Strom liefert, zieht ein mit dieser über die Leitung 106 verbundenes Relais 108 an und unterbricht die Leitung 98.

## Patentansprüche

1. Einrichtung zum Abschalten und erneuten Starten des Verbrennungsmotors eines Kraftfahrzeuges, mit einer auf die Neutralstellung des Schaltgetriebes ansprechenden Schaltvorrichtung, die in einem eine Verzögerungsschaltung enthaltenden Motorabschaltkreis liegt, dadurch gekennzeichnet, dass die Schaltvorrichtung (50) aus einem Reed-Schalter (33) und einem Magneten (33a) besteht, von denen einer am Schalthebel (10; 11) des Schaltgetriebes (12) und der andere ortsfest benachbart dem in seiner Neutralstellung (20) befindlichen Schalthebel angeordnet ist.

2. Einrichtung nach Anspruch 1, dadurch gekennzeichnet, dass die im Motorabschaltkreis liegende Schaltvorrichtung (50) gleichzeitig das Schaltorgan für das erneute Starten des Motors bildet und an einen zum Motoranlasser (102) führenden Stromkreis (98) angeschlossen ist.

3. Einrichtung nach Anspruch 1 oder 2, dadurch gekennzeichnet, dass ein Handwahlschalter (40) am Schalthebel (10; 11) zum Aktivieren des Motorabschaltkreises angebracht ist.

## Claims

1. An arrangement for switching-off and renewed starting of the internal combustion engine of a motor vehicle comprising switch means responding to the neutral position of the switch gear the switch means arranged in a switch-off circuit comprising delay switch means, characterized in that, the switch means (50) consisting of a reed switch (33) and a magnet (33a), of which one is arranged at the gear shift lever (10; 11) of the switch gear (12) and the other one stationary next to the gear shift lever in the neutral position thereof.

2. An arrangement as claimed in claim 1, characterized in that, that the switch means (50) arranged in the motor switch-off circuit is simultaneously the switch for the renewed starting of the motor and is connected to circuit (98) leading to the motor starter (102).

3. An arrangement as claimed in claims 1 or 2, characterized in that, that a hand-operated selector switch (40) is arranged at the gear shift lever (10; 11) to activate the motor switch-off circuit.

## Revendications

1. Dispositif pour couper et remettre en route le moteur à combustion d'un véhicule, avec un dispositif de commutation, mis en action sur la position neutre de la boîte de vitesses, qui se trouve dans un circuit de coupure du moteur contenant un système de temporisation, caractérisé en ce que le dispositif de commutation (50) est constitué d'un contacteur à lame (33) et d'un aimant (33a), dont l'un est disposé sur le levier de changement de vitesse (10, 11) de la boîte de vitesses et l'autre est disposé, de façon fixe à proximité du levier de vitesses quand il se trouve dans sa position neutre (20).

2. Dispositif suivant la revendication 1, caractérisée en ce que le dispositif de commutation (50) qui se trouve dans le circuit de coupure du moteur constitue en même temps l'organe de commutation pour la remise en route du moteur et est relié à un circuit (98) conduisant au démarreur du moteur (102).

3. Dispositif suivant la revendication 1 ou 2, caractérisé en ce qu'un commutateur à main (40) est monté sur le levier de vitesses (10, 11) pour mettre en action le circuit de coupure du moteur.

# FIG.2

# FIG.1

FIG.3

FIG.4